# EUROPEAN PATENT APPLICATION

(11) **EP 2 131 638 A1**
(43) Date of publication of application: **09.12.2009**
(21) Application number: 08425397.0
(22) Date of filing: 05.06.2008
(51) Int. Cl.: H05K 5/00, H02B 1/28

(54) **Protection device for electric apparatuses in explosive atmospheres**

(71) Applicant: Pepper+Fuchs Elcon S.r.l., 20052 Monza (Milano) (IT)
(72) Inventor: Galimberti, Stefano, 20100 Milano (IT); Gattanini, Carlo, 20041 Agrate Brianza (Milano) (IT)
(74) Representative: Brasca, Marco

(57) **Abstract**

The present invention relates to a protection device for electric apparatuses in explosive atmospheres, comprising a case (2) delimiting a holding volume (9, 10), a separation partition (11) inserted in the case (2) so as to divide the holding volume (9, 10) into a first portion (9) and a second portion (10). An electric apparatus (3) is buried in an incoherent material in the form of granules (13) filling the first portion (9). The separation partition (11) is defined by a printed board for electronic circuits. A face (11a) of the separation partition (11) facing the second portion (10) has a plurality of conductive connecting elements (17) that can be electrically connected to the electric apparatus (3) through the separation partition (11) and the incoherent material (13) and on which electric components (18, 19, 20) such as terminals, switches and LEDs are soldered.

## Description

The present invention relates to a protection device for electric apparatuses intended for use in explosive atmospheres.

The present invention falls within the field of electric and/or electronic apparatuses that must be installed in environments in which inflammable gases and/or dusts can be present in the atmosphere such as pharmaceutical, chemical, petrochemical plants, gas and oil extraction plants, etc. These apparatuses, such as data acquisition units for example, are used for handling analog and/or digital signals coming from the field or directed to the plant, possibly through suitable digital communication protocols.

All electric or electronic apparatuses designed to be installed in said environments must be planned and manufactured in such a manner that, even in the event of a failure leading to generation of sparks and/or local overheating, they cannot give rise to an explosion of such an extent as to cause damages, according to the European ATEX directive, to this aim defining different alternative or complementary protection methods.

The present invention primarily refers to the protection method "Exq" defined in the IEC regulations 60079-5 (Equipment Protection by Powder Filling), contemplating insertion of apparatuses in suitably sealed containers filled with quartz or glass grains with a diameter of about 1 mm. Interstices remain between the quartz grains that in any case are filled with the explosive gas of the atmosphere. Interstices are so small that, when a failure occurs, the generated explosion is a micro-explosion of such a reduced extent that it remains confined to the container.

A connection with the external environment is required for the electronic apparatus inserted in the container and buried in the sand so as to convey signals and/or carry input and/or output power via wires and/or cables that must pass through one of the container's walls without impairing the protection method.

To enable the electronic apparatus to be connected to and disconnected from the external signal network, the terminations of the above mentioned wires and/or cables taken out of the container are usually connected to suitable terminals. These terminals are contained in an environmental-protection envelope separated from the sand-containing volume, which envelope can be part or not of the above mentioned container. Wires and/or cables from the outside pass through apertures formed in the protection envelope to be jointed to the terminals.

Known are metal/plastic containers provided with an inner metal/plastic partition dividing the volume delimited by the container into two portions. In a first portion the electronic apparatus buried in the sand is inserted. In a second portion a support for terminals is installed. The wires connecting the apparatus to the terminals, with the aid of fairleads or equivalent solutions, pass through holes formed in the metal/plastic partition.

Also known are devices consisting of two separate containers one for the electronic apparatus buried in the sand and the other for the terminals made integral with each other.
These solutions have some drawbacks in particular concerning the production costs and the sizes of known containers.

Specifically, accomplishment of holes and installation of fairleads in the partition separating the region taken up by the sand and submitted to possible micro-explosions must be carried out in such a manner as to ensure sealing, thereby adopting fairleads having particular requisites which are also very expensive, the cost of same adversely affecting the cost of the whole known device.

In addition, the volume of the container portion or of the dedicated container designed to receive the terminals must be large enough to enable mounting of the base on which terminals are to be installed. As a result, the device bulkiness, above all if the device is made up of two containers, is large and could make it difficult to mount the same in narrow spaces. If, for the purpose of reducing bulkiness, the volume dedicated to reception of the terminals is reduced, access to the latter becomes difficult, which will bring about difficulties in mounting, dismantling and/or maintenance operations.

It is also important to point out that manufacture of known devices in the form of two containers or a single container with a separation partition, and suitable housings and hooking systems for the terminal base or strip makes these devices complicated and expensive.

It is an object of the present invention to solve the problems found in the known art by proposing a protection device for electric apparatuses in explosive atmospheres that is simple and inexpensive.

The foregoing and further objects that will become more apparent in the progress of the present description, are substantially achieved by a protection device for electric apparatuses in explosive atmospheres according to the features herein described and claimed.

Further features and advantages will become more apparent from the detailed description of a preferred but not exclusive embodiment of a device in accordance with the present invention.

This description will be set out hereinafter with reference to the accompanying drawings, given by way of non-limiting example, in which:
- Fig. 1 is a perspective view of a device in accordance with the invention;
- Fig. 2 shows the device in Fig. 1 with the cover removed;
- Fig. 3 is an elevation side view in section of the device seen in Fig. 1;
- Fig. 4 shows a perspective view of the device in Fig. 1 with some parts removed for a better view of others;
- Fig. 5 is a perspective view of an element of the device seen in Fig. 1, removed from the case holding it; and
- Fig. 6 is a side view of the element shown in Fig. 5.

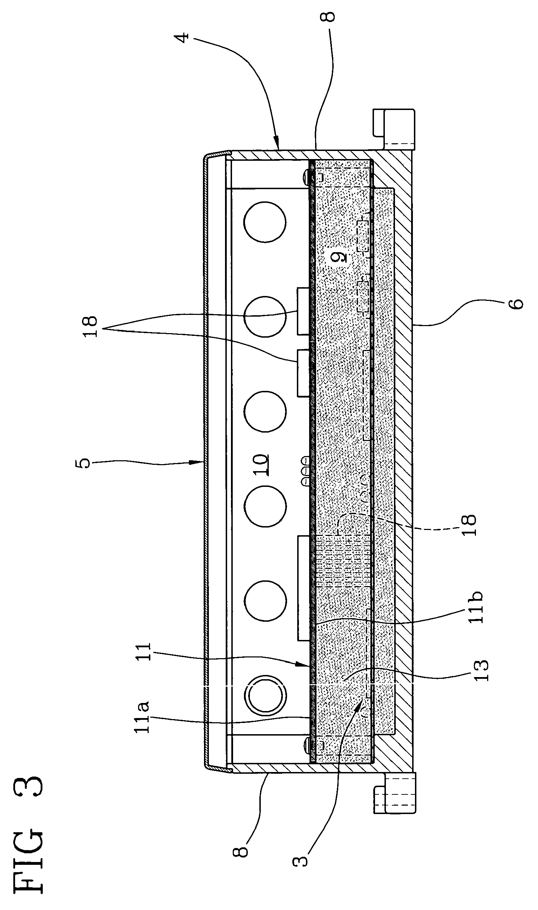

In accordance with the present invention a protection device 1 for electric apparatuses in explosive atmospheres is described. Device 1 comprises a case 2, preferably but not exclusively made of metal, adapted to house an electric apparatus 3. According to the representation in Figs. 3, 5 and 6, the electric apparatus 3 is an electronic circuit made on a printed board.

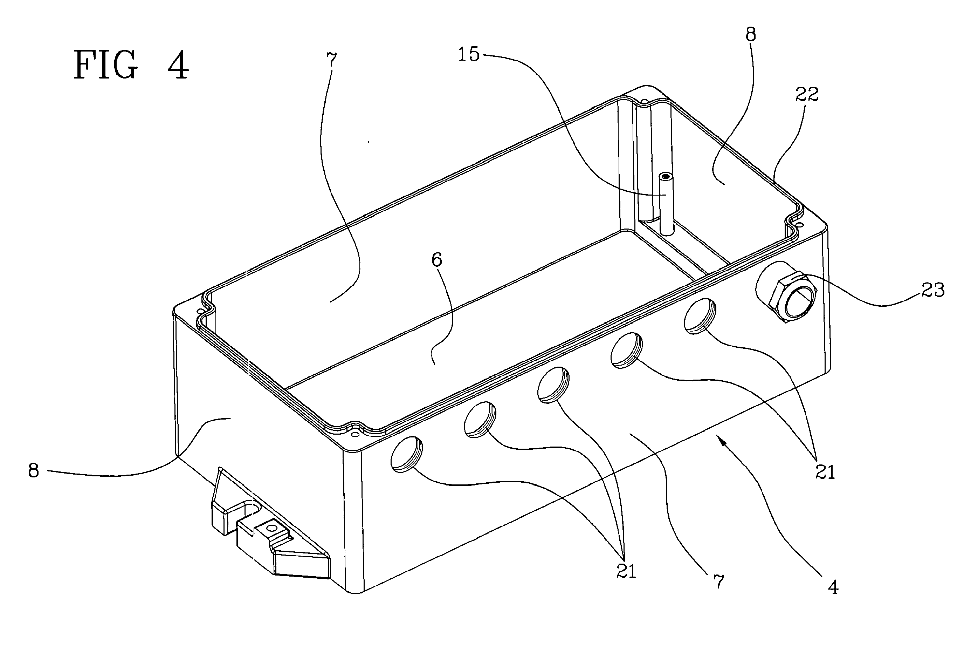

In the non-limiting embodiment shown, case 2 is of parallelepiped shape and comprises a container 4 closed by a cover 5. Container 4 has a rectangular bottom wall 6, two major side walls 7 and two minor side walls 8 (Fig. 4).

The holding volume delimited by case 2 is divided into a first portion 9 and a second portion 10 by means of a separation partition 11 extending parallel to the bottom wall 6 and having a peripheral edge 12 thereof in contact with the side walls 7, 8 of container 4. The first portion 9 is included between the separation partition 11 and bottom wall 6 and the second portion 10 is included between the separation partition 11 and cover 5 (Fig. 3). Preferably, the distance of the separation partition 11 from the bottom wall 6 is about the same as twice the distance of the partition 11 itself from cover 5. The electronic circuit 3 is housed in the first portion 9 close to the bottom wall 6 and is therefore spaced apart from the separation partition 11.

In accordance with the above mentioned regulations IEC 60079-5, the first portion 9 is fully filled with incoherent material in the form of granules 13 the purpose of which is to extinguish possible micro-explosions due to failures in the electronic elements buried in the incoherent material (Fig. 3). The incoherent material in the form of granules 13 is usually quartz or glass. The average diameter of each granule is included between about 0.5 mm and about 1 mm.

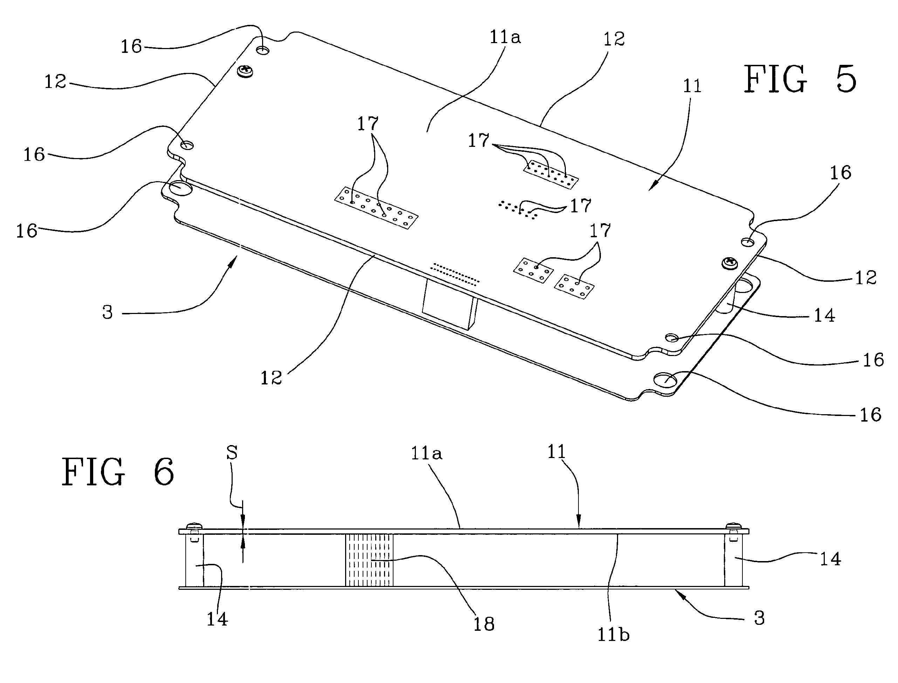

The separation partition 11 is mounted in a removable manner in container 4 and in addition is preferably mechanically secured to the printed board of the electronic circuit 3 in such a manner that they both can be easily drawn out of case 2. To this aim, the separation partition 11 and printed board of the electronic circuit 3 are integrally connected by spacers 14 interposed between the two elements (Fig. 6).

Container 4 comprises pins 15 mounted on the bottom wall 6 at the corners of container 4 and extending towards cover 5. The printed board of the electronic circuit 3 further has holes 16 at its edges, which holes are adapted to house pins 15 so as to guide and fasten the partition 11 and board 3 to container 4. For the purpose, holes 16 in partition 11 are passed through by screws, each of which is locked in a final end of a respective pin 15.

Advantageously, and representing the primary innovative aspect, the separation partition 11 too is a printed board adapted to form electronic circuits. By "printed board" it is intended a supporting plate adapted to bear electronic components and accessories and to electrically connect them by means of conductive paths extending on layers of the plate or through the thickness of same.

The printed board of partition 11 is made of epoxy glass or fibreglass, preferably of the FR4 type, or polyamide or also bakelite®.

Thickness "s" (Fig. 6) of the printed board defining partition 11 must be of such a nature as to ensure resistance to possible micro-explosions and simultaneously allow conductive paths to be easily made through said thickness. In addition, advantageously, thickness must be adapted to overcome the 2-atmoshpere type-test provided by the standard, so that expensive routine tests at lower pressure are avoided. Typically, thickness "s" is included between about 2 mm and about 4 mm, more preferably between about 2.5 mm and about 3.5 mm.

In fact, a first face 11 of the separation partition 11 facing cover 5 and the second portion 10 of the holding volume has a plurality of conductive connecting elements 17 (Fig. 5), which are electrically connected, by means of conductive paths passing through the thickness of said partition 11, to a second face 11b opposite to the first one 11a and facing the first holding volume 9 and the electric apparatus 3. Further conduction elements 18 (Fig. 6) extend between the second face 11b and the electronic circuit 3 board, through the incoherent material 13 and allow electric connection between conductive connecting elements 17 and electric apparatus 3.

Advantageously, said conductive connecting elements 17 in addition to ensuring an electric connection, also enable mechanical mounting of electric components such as terminals 18, signal lights 19 (LEDs), switches 20 (SMT dip-switches or push-buttons, for example), etc. directly on the first face 11a of the separation partition 11. The conductive connecting elements 17 preferably have seats in which the pins of said electronic components 18, 19, 20 are housed, which pins are soldered in said seats, in the same manner as in a traditional printed board adapted to form electronic circuits.

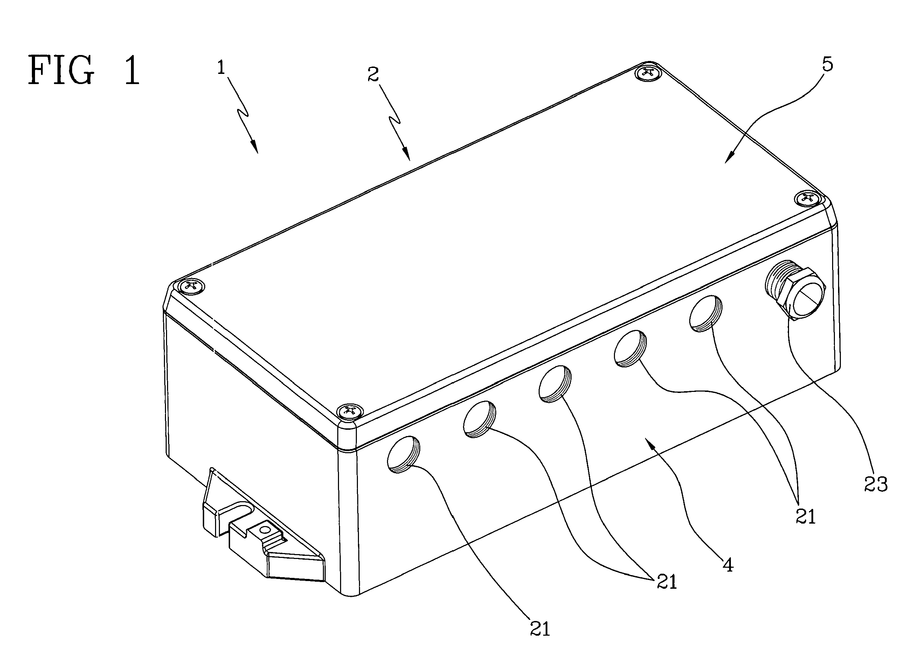

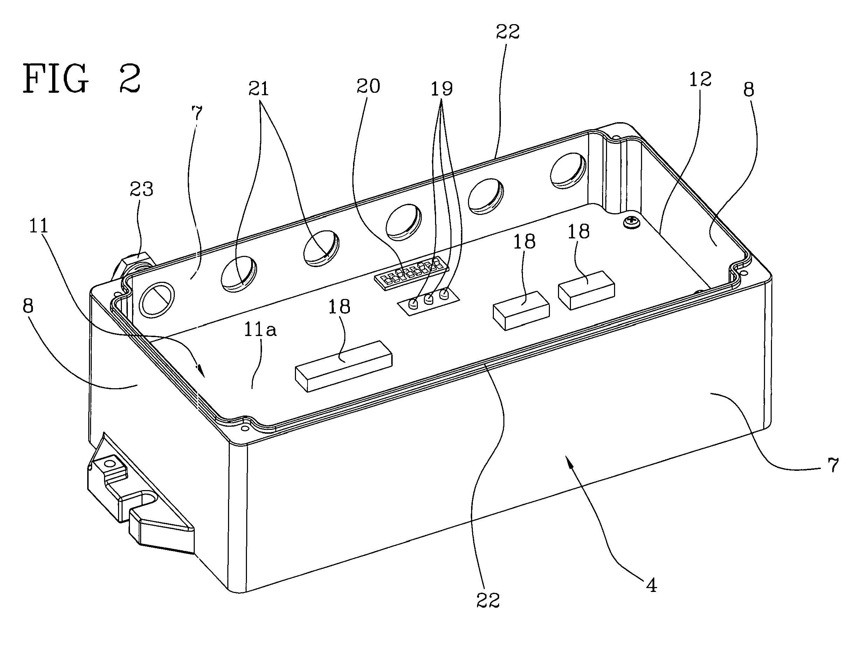

Terminals 18 are used to easily connect or disconnect the electric apparatus 3 to and from the external signal network. To this aim, case 2 has through apertures 21 facing the second portion 10 for passage of wires/cables to be jointed to terminals 18. As shown, apertures 21 are formed in one of the major side walls 7 of container 4 close to an edge 22 in contact with cover 5 and are adapted to receive suitable fairleads 23 in engagement (Figs. 1, 2 and 4).

The conductive connecting elements 17 adapted to receive terminals 18 are made following the protection method with increased safety ("Exe" defined in IEC regulations 60079-7.

The conductive connecting elements 17 adapted to receive signal light's 19 and switches 20 are made following the protection method with intrinsic safety "Exi", defined in the IEC regulations 60079-11, in which method said electric components 18, 19, 20 are provided to be governed through a limited-energy circuit located in the "Exq" area.

The present invention solves the problems found in the known art and achieves the intended purposes.

The separation partition is of easy, cheap and quick manufacture and installation. In fact, said partition is produced separately through traditional techniques for manufacturing boards for printed circuits and subsequently mounted in the case by mere insertion. Therefore manufacture of the device in accordance with the invention allows time and cost savings as compared with the production of the devices of known type.

The device in question enables the connecting components (terminals), signal lights (LEDs) and configuration elements (switches/push buttons) to be directly mounted on the separation partition. This solution allows the volume of the chamber dedicated to reception of the terminals to be reduced, which will involve a reduction in the device bulkiness as a whole.

The device ensures easy access to the terminals and the other signal and configuration components and therefore makes the device installation/dismantling and maintenance easier. In fact, it is sufficient to remove the cover from the container and a full view of the components is offered together with sufficient room for easily acting on the same.

Thickness of the partition ensures resistance to possible micro-explosions and to overpressure tests carried out at 2 Atm pressures, as required by "Exq" regulations.

The device of the invention allows the requirements of the IEC regulations "Exq" 60079-5 to be observed.

Said device enables the signals to be routed through the connecting cables by the terminals, of the standard "Exe" type, in an inexpensive and easy manner in the observance of the "Exe" regulations because they are directly soldered through the partition.

Likewise, the device of the invention enables signals towards the LEDs or from the switches to be started off in a cheap and easy manner in the observance of the "Exi" regulations because they are directly soldered through the partition.

## Claims

1. A protection device for electric apparatuses in explosive atmospheres, comprising:
- a case (2) delimiting a holding volume (9, 10);
- a separation partition (11) inserted in the case (2); said partition (11) dividing the holding volume (9, 10) into a first portion (9) and a second portion (10);
- incoherent material in the form of granules (13) filling the first portion (9), said first portion (9) being adapted to receive an electric apparatus (3) buried in the incoherent material in the form of granules (13);
- at least one electric component (18, 19, 20) located in the second portion (10),
**characterised in that** the separation partition (11) is a printed board for electronic circuits,
**in that** a face (11a) of the separation partition (11) facing the second portion (10) has a plurality of conductive connecting elements (17) that can be electrically connected to the electric apparatus (3) through the separation partition (11), and
**in that** said at least one electric component (18, 19, 20) is mounted on said conductive connecting elements (17).

2. A device as claimed in claim 1, wherein the separation partition (11) is made of a material selected from the group comprising: FR4, polyamide, bakelite®, fibreglass.

3. A device as claimed in claim 1, wherein the separation partition (11) has a thickness included between about 2 mm and about 4 mm, preferably included between about 2.5 mm and about 3.5 mm.

4. A device as claimed in claim 1, wherein said at least one electric component (18, 19, 20) is a terminal (18), for connecting or disconnecting the electric apparatus (3) to or from an external signal network.

5. A device as claimed in claim 1, wherein said at least one electric component (18, 19, 20) is a signal light (19).

6. A device as claimed in claim 1, wherein said at least one electric component (18, 19, 20) is a switch (20) .

7. A device as claimed in claim 1, wherein said at least one electric component (18, 19, 20) is soldered to the respective conductive connecting elements (17).

8. A device as claimed in claim 1, wherein the separation partition (11) is mounted in the case (2) in a removable manner.

9. A device as claimed in claim 1, wherein the case (2) comprises a container (4) having a bottom wall (6) and a cover (5) opposite to the bottom wall (6); the first portion (9) of the volume (9, 10) being included between the separation partition (11) and the bottom wall (6); the second portion (10) of the volume (9, 10) being included between the separation partition (11) and the cover (5).

10. A device as claimed in claim 4, wherein the case (2) has apertures (21) facing the second portion (10) for passage of cables to be jointed to the terminals (18).

11. A device as claimed in claim 1, wherein the electric apparatus (3) is an electronic circuit formed on a printed board.

12. A device as claimed in claim 11, wherein the electronic circuit (3) is spaced apart from the separation partition (11).

13. A device as claimed in claim 11, wherein the electronic circuit (3) is mechanically secured to the separation partition (11).

14. A device as claimed in claim 11, further comprising spacers (14) interposed between the electronic circuit (3) and the separation partition (11), for mutually engaging said electronic circuit (3) and separation partition (11) and keeping them mutually spaced apart.
